Europäisches Patentamt

(19) European Patent Office

Office européen des brevets

(11) EP 0 896 301 A1

## (12) EUROPEAN PATENT APPLICATION

(43) Date of publication:
10.02.1999 Bulletin 1999/06

(51) Int. Cl.⁶: $G06T\ 15/10$, $H04N\ 7/46$

(21) Application number: 97305967.8

(22) Date of filing: 06.08.1997

(84) Designated Contracting States:
AT BE CH DE DK ES FI FR GB GR IE IT LI LU MC NL PT SE

(71) Applicant:
VICTOR COMPANY OF JAPAN, LIMITED
Kanagawa-ku Yokohama (JP)

(72) Inventors:
• Sugiyama, Kenji
Yokosuka-shi, Kanagawa-ken (JP)

• Nakamura, Hiroya
Kanazawa-ku, Yokohama (JP)

(74) Representative:
Senior, Alan Murray et al
J.A. KEMP & CO.,
14 South Square,
Gray's Inn
London WC1R 5LX (GB)

(54) Stereoscopic image interpolating apparatus and method

(57) A pair of right and left actual images are photographed at different viewpoints, for forming an interpolated image at a viewpoint positioned between the viewpoints of the right and left actual images. A shift vector detecting means (8) obtains a shift vector representing a dislocation of patterns between the right and left actual images within a search range being set based on a viewpoint distance between the right and left actual images. A shift amount calculating means (9) calculates a shift amount required for an interpolation in each block of the right and left actual images based on viewpoint information and the shift vector. A pair of image shift means (3,13) shifts each block image of the right and left actual images by the calculated shift amount. A pair of multipliers (4,14) multiples predetermined coefficients (k, 1-k) with block images of the right and left actual images. And, an adder (5) adds the block images of the right and left actual images to obtain an interpolated image.

FIG. 1

## Description

### BACKGROUND OF THE INVENTION

#### 1. Field of the Invention:

The present invention relates to an apparatus and a method for realizing a display or a printing of a stereoscopic image using actual images photographed by a camera or using computation processing. More specifically, the present invention relates to a stereoscopic image interpolating apparatus and a related method capable of producing interpolated images at a plurality of virtual viewpoints positioned between two viewpoints of actual images.

#### 2. Prior Art:

In general, quality and accuracy of a stereoscopic image can be improved with increasing number of images photographed from different viewpoints (or angles). However, taking many actual images at a time is difficult and time-consuming. When an objective is stationary, repetitive and long-lasting photographing operations will be required to take sufficient number of images at different viewpoints. When an objective is moving, numerous cameras will be required to take many images at a time. Image information to be processed will increase correspondingly. Positioning and adjustment of numerous cameras are complicated.

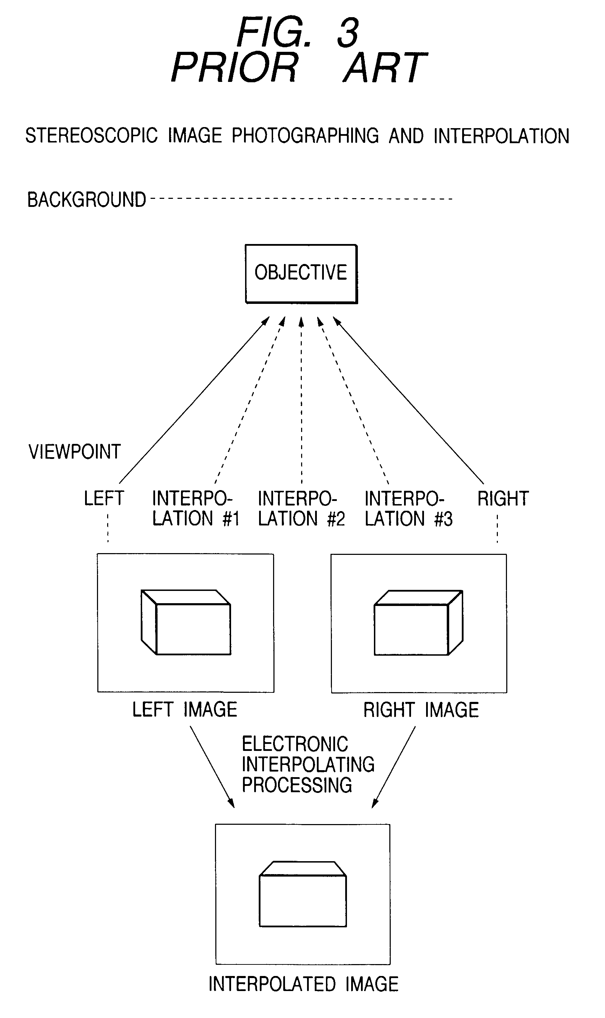

To solve the above-described problems, an interpolation of images has been conventionally used. As shown in Fig. 3, two actual images are photographed from predetermined right and left viewpoints. Obtained images are electronically processed in a computer to obtain an interpolated image.

This kind of processing method is disclosed in the United States Patent 5,455,689, entitled "Electronically Interpolated Integral Photography System", or in Unexamined Japanese Patent Application No. 7-210686, published in 1995.

### SUMMARY OF THE INVENTION

An object of the present invention is to provide a stereoscopic image interpolating apparatus and a related method robust against a dislocation of images occurring due to a three-dimensional change between viewpoints, such as a change in a back-and-forth direction or a change in a vertical direction. Another object of the present invention is to provide a stereoscopic image interpolating apparatus and a related method which are not influenced by a noise or an error caused during the interpolating processing.

To accomplish the above and other related objects, one aspect of the present invention provides a stereoscopic image interpolation for producing a stereoscopic image using a plurality of images.

A pair of right and left actual images are photographed at different viewpoints, for forming an interpolated image at a viewpoint positioned between the viewpoints of the right and left actual images. A shift vector representing a dislocation of patterns between the right and left actual images is obtained within a search range being set based on a viewpoint distance between the right and left actual images. A shift amount required for an interpolation in each block of the right and left actual images is calculated based on viewpoint information and the shift vector. Each block image of the right and left actual images is shifted by the shift amount. Predetermined coefficients are multiplied with corresponding block images of the right and left actual images. And, the corresponding block images of the right and left actual images are added to obtain an interpolated image.

Preferably, the viewpoints are positioned in a horizontal direction. The search range has a horizontal size approximately equal to or larger than two times a vertical size thereof. Furthermore, the search range is asymmetric in the horizontal direction.

According to the above-described stereoscopic image interpolation, the shift vector is detected based on a block matching. This is effective to reduce errors in the detection of the shift vector, because the matching calculating is performed by referring many pixels.

Another aspect of the present invention provides a stereoscopic image interpolation for producing a stereoscopic image using a plurality of images. A pair of right and left actual images are photographed at different viewpoints for forming an interpolated image at a viewpoint positioned between the viewpoints of the right and left actual images. The right and left actual images are divided into a plurality of blocks. A shift vector representing a dislocation of patterns between the right and left actual images is obtained in a concerned block. The shift vector is obtained based on information relating to a shift vector detection in an adjacent block as well as information of the concerned block. It is checked whether a difference between the shift vector of the concerned block and a shift vector of an adjacent block is larger than a predetermined degree. The shift vector of the concerned block is replaced with the shift vector of the adjacent block to produce a corrected shift vector, when the detected difference is larger than the predetermined degree. A vector value of the corrected shift vector is generated together with image information used for an interpolation. A shift amount required for the interpolation in each block of the right and left actual images is calculated based on viewpoint information and the corrected shift vector. Each block image of the right and left actual images is shifted by the calculated shift amount. The interpolation is performed differently depending on a difference between the shift vector of the concerned block and the shift vector of the adjacent block. When this difference is smaller than a predetermined value, the interpolated image is produce by adding block images of the right and left actual images. On the other hand, when the difference is larger than the predetermined value, the interpolated image is produced by using either of the block images of the right and left actual images.

Preferably, either of right and left adjacent blocks is selected when the difference is larger than the predetermined degree. A shift vector of the selected adjacent block has a larger absolute value than the other.

A shift vector of a right adjacent block is compared with a shift vector of a left adjacent block. The shift vector having a larger absolute value is used for the interpolation.

In general, an invalid region is located at an edge of the right and left actual images with a width equivalent to a horizontal maximum value of a given search range. Preferably, a shift vector of a block positioned in the invalid region is replaced with a shift vector of a closest block positioned in a valid region. The valid region is located inside the invalid region.

BRIEF DESCRIPTION OF THE DRAWINGS

The above and other objects, features and advantages of the present invention will become more apparent from the following detailed description which is to be read in conjunction with the accompanying drawings, in which:

Fig. 1 is a schematic block diagram showing a stereoscopic image interpolating apparatus in accordance with a first embodiment of the present invention;
Fig. 2 is a view illustrating an interpolation in accordance with the first embodiment of the present invention;
Fig. 3 is a view illustrating a conventional interpolation;
Fig. 4 is a schematic block diagram showing a detailed arrangement of a shift vector detector in the stereoscopic image interpolating apparatus in accordance with the first embodiment of the present invention;
Figs. 5A to 5C are views showing various search ranges used for detecting a shift vector in accordance with first and second embodiments of the present invention;
Fig. 6 is a schematic block diagram showing a stereoscopic image interpolating apparatus in accordance with a third embodiment of the present invention;
Fig. 7 is a view showing shift vectors in 5×5 blocks in accordance with the third embodiment of the present invention;
Fig. 8 is a view illustrating a correction of an error shift vector in accordance with the third embodiment of the present invention; and

Fig. 9 is a view illustrating a correction of shift vectors positioned in an invalid region in accordance with a fourth embodiment of the present invention.

DESCRIPTION OF THE PREFERRED EMBODIMENTS

Preferred embodiments of the present invention will be explained with reference to the accompanying drawings. Identical parts are denoted by the same reference numerals throughout the views.

First embodiment

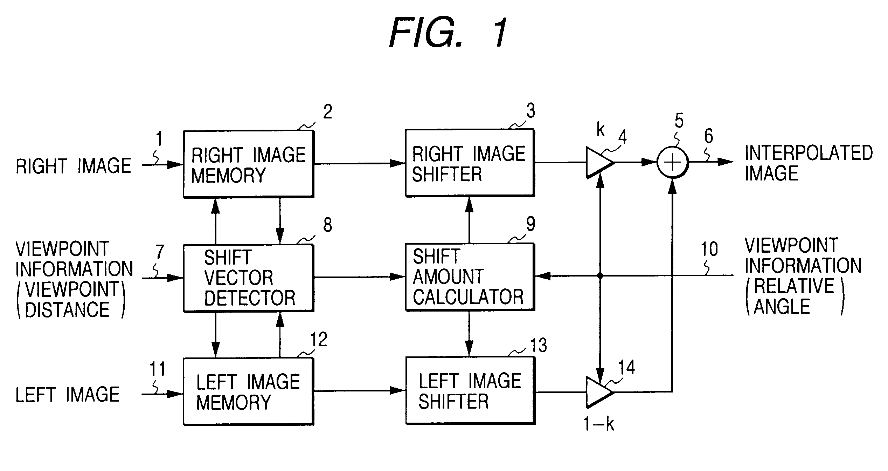

Fig. 1 is a schematic block diagram showing a stereoscopic image interpolating apparatus in accordance with a first embodiment of the present invention.

A right image, being an actual image photographed at a predetermined right viewpoint, is entered from an input terminal 1 and stored in a right image memory 2. A left image, being another actual image photographed at a predetermined left viewpoint, is entered from an input terminal 11 and stored in a left image memory 12. The right image is sent from the right image memory 2 to a right image shifter 3. The left image is sent from the left image memory 12 to a left image shifter 13. A shirt vector detector 8 receives the left image and the right image from the right image memory 2 and the left image memory 12, respectively.

More specifically, the shift vector detector 8 receives viewpoint information (e.g., viewpoint distance) of the actual right and left images given from an input terminal 7, in addition to the left and right images sent from the right image memory 2 and the left image memory 12. Each image is divided into a plurality of blocks each consisting of 4×4 to 16×16 pixels. The shift vector detector 8 obtains a shift vector in each block. The shift vector represents a dislocation of patterns between the right and left actual images in a concerned block

The method used for the detection of the shift vector is similar to a motion vector detecting method which is used for a format conversion of a moving image. The Unites States Patent No. 4,383,272, entitled "Video Signal Interpolation Using Motion Estimation", discloses this kind of format conversion method. Unexamined Japanese Patent Application Nos. 6-133280 and 6-141291, published in 1994, disclose similar format conversion methods. When this kind of format conversion method is used for this embodiment, images of different times are replaced by images of different viewpoints.

When an interpolated image is obtained for a viewpoint positioned between the viewpoints of two actual images, a relative position (i.e., a relative angle) between the actual image and the interpolated image is given as viewpoint information from an input terminal 10.

A shift amount calculator 9 calculates shift amounts of the right and left images based on the viewpoint information given from the input terminal 10 and the shift vector information obtained from the shift vector detector 8, respectively.

The shift vector information are constant irrespective of the viewpoint. Entered actual images have only one shift vector information. The shift amount is variable depending on the viewpoint. A shift position (x', y') of the right image is defined by the following equations.

$$x' = x \times a / (a + b)$$

$$y' = y \times a / (a + b)$$

where (x, y) represents the shift vector, "a" represents a viewpoint distance between the interpolated image and the right image, and "b" represents a viewpoint distance between the interpolated image and the left image.

A right image shifter 3 receives a block image (i.e., a divided image of each block) from the right image memory 2, and shifts this block image by a shift amount given from the shift amount calculator 9. An output of the right image shifter 3 is sent to a right multiplier 4. The right multiplier 4 multiplies a coefficient "k" with the output of the right image shifter 3.

A left image shifter 13 receives a block image (i.e., a divided image of each block) from the left image memory 12, and shifts this block image by a shift amount given from the shift amount calculator 9. An output of the left image shifter 13 is sent to a left multiplier 14. The left multiplier 14 multiplies a coefficient "1 - k" with the output of the left image shifter 13.

The coefficient "k" determines a weight given to the right image relative to the left image. The image closer to the right image is given a large weight compared with the image far from the right image. For example, a practical value for the coefficient "k" is b / (a + b) . It may be possible to roughly approximate k to either of 0, 1/2 and 1.

To produce an interpolated image, an adder 5 receives and adds the images which are weighted in the multipliers 4 and 14. The resultant interpolated image is generated from an output terminal 6.

The viewpoint information entered from the input terminal 10 is successively changed. A plurality of interpolated images are obtained in accordance with given values of the viewpoint information.

For example, the right and left actual images are spaced 10 degrees in their viewpoints. By dividing 10 degrees by ten, a total of nine interpolated images are obtained for intermediate viewpoints positioned between two actual images.

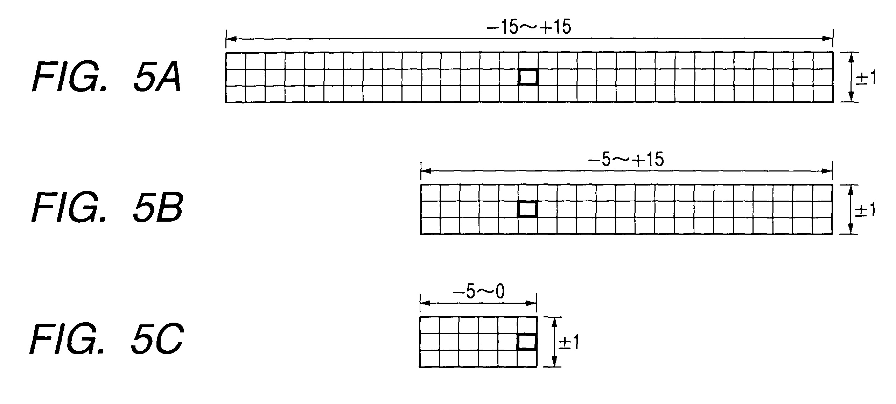

Fig. 5 shows a setting of a search range used in the shift vector detection, which is a characteristic part of the present embodiment.

Setting an adequate search range in the shift vector detection is important to obtain a correct interpolated image.

An excessively wide search range will cause an error m the shift vector detection.

When a photographing operation is performed in the arrangement shown in Fig. 3, an objective is basically positioned at a center. A background is spaced far from the objective. A shift vector of the background becomes large with increasing distance between the objective and the background. However, the shift vector of the background is negligible when a unicolor or non-patterned background, such as a blackout curtain, is used. This is effective to reduce the search range. The search range can be reduced to an appropriate size corresponding to the objective positioned at the center.

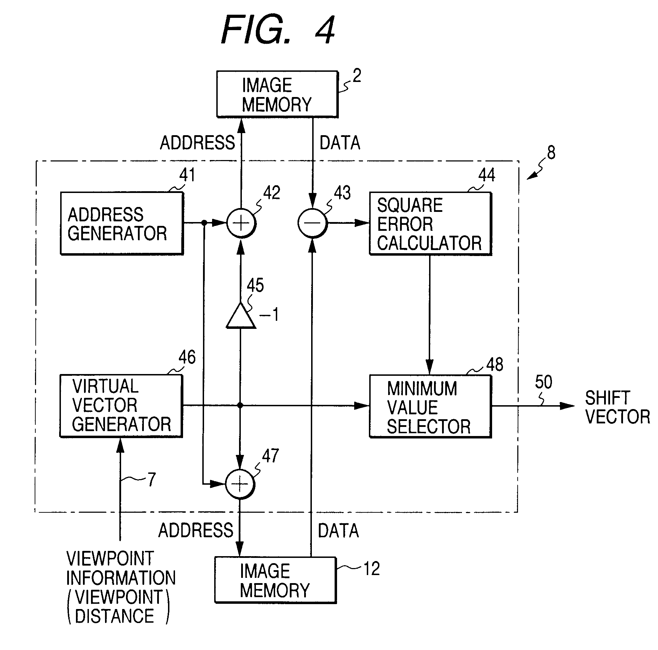

Fig. 4 shows a detailed arrangement of the shift vector detector 8. A basic operation of the shift vector detector 8 is a pattern matching between corresponding blocks between the right and left images. First, addresses of the image memories 2 and 12 are designated. Actual image data are obtained for each shift vector within the given search range. A shift vector having the smallest matching error is selected.

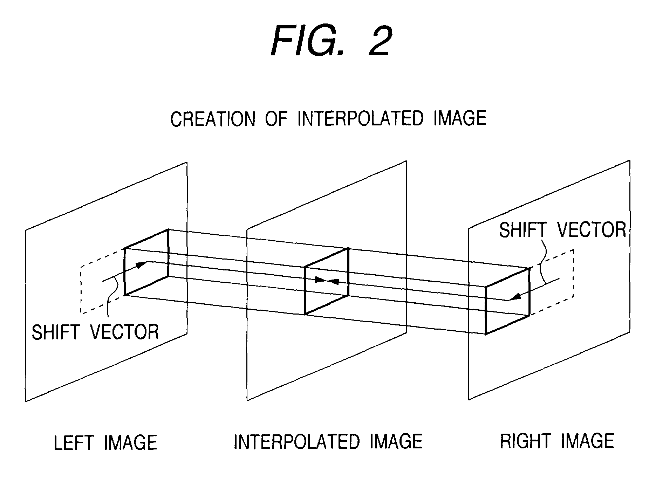

More specifically, an address generator 41 produces an image address comprising a block address and a pixel address corresponding to the shift vector of 0. The block address is allocated to each block. The pixel address is allocated to each pixel in a block. A virtual vector generator 46 successively produces virtual shift vectors in the search range. An output of the virtual vector generator 46 is entered into a vector inverter 45. The vector inverter 45 inverts the output of the virtual vector generator 46. An adder 42 adds an output of the address generator 41 and the output of the vector inverter 45, and produces an address designating an image block which is shifted in a minus direction by a shift amount given by the virtual vector generator 46. An output of the adder 42 is sent to the image memory 2. Another adder 47 adds the output of the address generator 41 and the output of the virtual vector generator 46, and produces an address designating an image block which is shifted in a plus direction by a shift amount given by the virtual vector generator 46. An output of the adder 47 is sent to the image memory 12. Due to the presence of the vector inverter 45, the shift vector of the right image is opposed to the shift vector of the left image, as shown in Fig. 2.

The search range is symmetric, and wide in the horizontal direction (-15 to +15 pixels) and narrow in the vertical direction (-1 to +1 pixels), as shown in Fig. 5A.

The image memories 2 and 12 receive the addresses reflecting the shift vectors from the adders 42 and 47 of the shift vector detector 8. Image data of the designated addresses are read out of the image memories 2 and 12, respectively. A subtracter 43 receives the image data read out of the image memories 2 and 12 and produces a difference of the readout image data. An output of the subtracter 43 is sent to a square error calculator 44 which calculates a square of the output of the subtracter 43. Differences between corresponding pixels are accumulated in each block. The accumulated value is a square error value of the virtual shift vector.

A minimum value selector 48 compares obtained square errors of all virtual shift vectors in the search range, and selects a specific virtual shift vector having the minimum error. The selected virtual shift vector is generated from an output terminal 50 as a shift vector of the concerned block.

Second embodiment

According to the second embodiment, the search range is asymmetric. A horizontal search range extends from -5 to +15 pixels, as shown in Fig. 5B, or from + 5 to -15 pixels. Thus, the right search range is wider or narrower than the left search range. Either of the right and left search ranges, coinciding with the shift direction of the background, is set wider.

When the unicolor or non-patterned background is used, the shift vector of the background is negligible. In this case, the wider search range can be reduced to 0. A smaller search range extends from 0 to -5 pixels, as shown in Fig. 5C, or from +5 to 0 pixels. Either of the right and left search ranges, coinciding with the shift direction of the object, is set wider.

The rest of the structural arrangement and operations are identical with those disclosed in the first embodiment.

Third embodiment

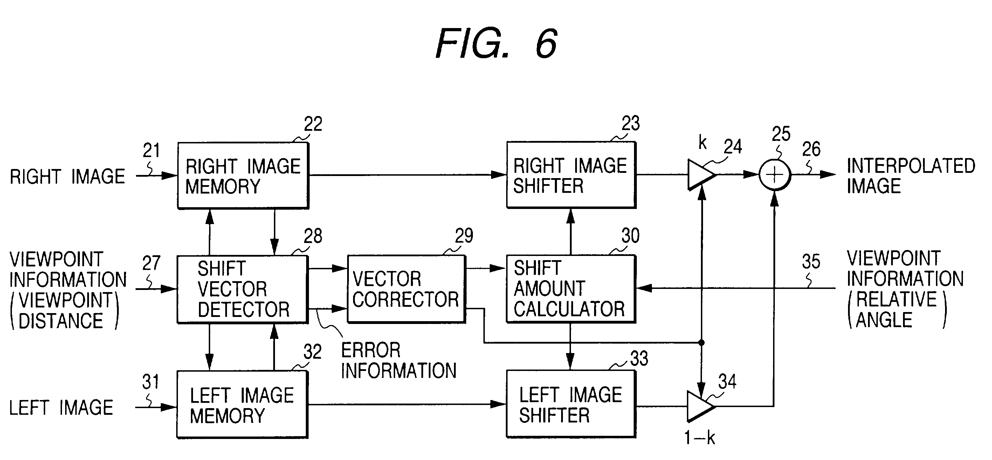

Fig. 6 is a schematic block diagram showing a stereoscopic image interpolating apparatus in accordance with a third embodiment of the present invention.

A right image, being an actual image photographed at a predetermined right viewpoint, is entered from an input terminal 21 and stored in a right image memory 22. A left image, being another actual image photographed at a predetermined left viewpoint, is entered from an input terminal 31 and stored in a left image memory 32. The right image is sent from the right image memory 22 to a right image shifter 23. The left image is sent from the left image memory 32 to a left image shifter 33. A shift vector detector 28 receives the left and right images from the right image memory 22 and the left image memory 32, respectively.

More specifically, the shift vector detector 28 receives viewpoint information (e.g., viewpoint distance) of the right and left actual images given from an input terminal 27, in addition to the left and right images sent from the right image memory 22 and the left image memory 32. Each image is divided into a plurality of blocks each consisting of 4×4 to 16×16 pixels. The shift vector detector 28 obtains a shift vector in each block.

The method used for the detection of the shift vector is similar to a motion vector detecting method which is used for a format conversion of a moving image. The Unites States Patent No. 4,383,272, entitled "Video Signal Interpolation Using Motion Estimation", discloses this kind of format conversion method. Unexamined Japanese Patent Application Nos. 6-133280 and 6-141291, published in 1994, disclose similar format conversion methods. When this kind of format conversion method is used for this embodiment, images of different times are replaced by images of different viewpoints.

The shift vector obtained in a region of the objective is greatly different in size from the shift vector obtained in a region of the background. Even in the region of the objective, the size of the shift vector obtained in this manner may be slightly different because the size of the shift vector varies depending on the position in a back-and-forth direction. Basically, a change between blocks is small when these blocks are positioned on the same objective (or on the background).

However, a problem is caused from such a change in the shift vector detection. A right image may not match with a left image due to such a change. This leads to a failure in the detection of a correct shift vector.

However, in the stereoscopic image, it is rare that an interpolated image does not match with neither the right image nor the left image. Usually, either of the right image and the left image corresponds to the interpolated image at least partly.

Accordingly, in many cases, the interpolation can be accomplished successfully by correcting the shift vector and then performing the interpolation by using either of the right and left images.

The shift vector obtained in the shift vector detector 28 is sent to a vector corrector 29. The vector corrector 29 stores a plurality of shift vectors equivalent to one screen, and compares shift vectors between a concerned block with a neighboring block. As a result of this comparison, the shift vector of the concerned block is corrected based on the information relating to the shift vector detection of the compared neighboring block as well as information of said concerned block. In the above-described comparison, a difference equivalent to or smaller than one pixel is negligible. When a difference between two shift vectors is larger than one pixel, these shift vectors are recognized as different vectors.

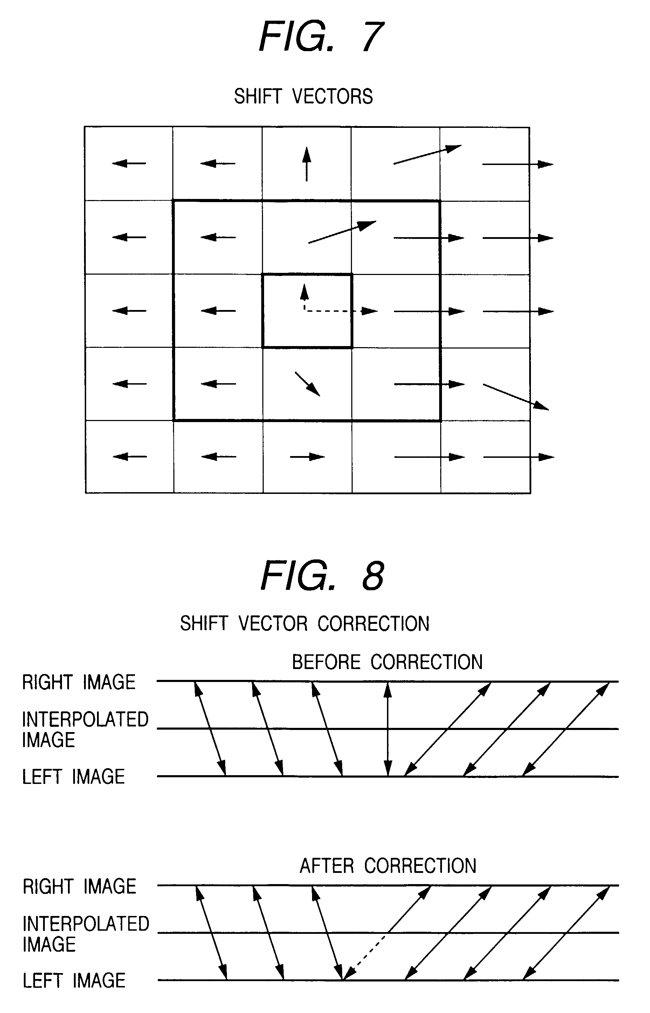

According to this embodiment, four neighboring blocks are located above and below a concerned block or right and left to this concerned block, respectively. Thus, the shift vector of the concerned block is compared with four shift vectors of these neighboring blocks. If necessary, four more shift vectors of another neighboring blocks located diagonally above and below the concerned block can be added. When the shift vector of the concerned block does not coincide with any one of the compared shift vectors of the neighboring blocks (as shown in Fig. 7), the concerned vector is judged as an error vector. In Fig. 7, the shift vector of a central block is different from all of eight shift vectors of the neighboring blocks. Hence, the shift vector of the central block is corrected.

As a practical method for the correction, an absolute value of the shift vector of the right block next to the concerned block is compared with an absolute value of the shift vector of the left block. The shift vector of the concerned block is replaced by the shift vector having a larger absolute value. In the case of Fig. 7, the shift vector of the right block next to the central block has a larger absolute value than the shift vector of the left block. Hence, the shift vector of the central block is replaced by the shift vector of the right block, as indicated by a dotted line.

Fig. 8 shows the right and left actual images, the interpolated image, and shift vectors taken along one scanning line. In Fig. 8, divided sections on the interpolated image line correspond to respective image blocks. Bold lines on the actual images represent the region of the object. The rest of the actual images corresponds to the background.

As shown in Fig. 8, the shift vector has a larger shift amount in the region of the background. In such a case, at the inner edge of the background region of the right image, there may be no image suitably used for the interpolation due to the large shift amount. Thus, to perform an accurate interpolation, it is desirable to replace the shift vector of the central block with the shift vector of the right block rather than the shift vector of the left block.

The corrected shift vector is sent to a shift amount calculator 30. When the shift vector is corrected, either of the right image and the left image is selected for the interpolation. The judgement for this selection is performed by the vector corrector 29.

More specifically, the image selection between the right image and the left image is based on the block direction of the selected vector and the sign (+ or -) of the horizontal component of the selected vector. As a result of the image selection, the corrected vector is not placed near or across the vector of the opposed block.

In the example shown in Fig. 8, it is assumed that the direction of the corrected vector is positive. The block direction of the selected vector is right, and the horizontal component of the vector is positive. Thus, the right image is selected. As a result, in Fig. 8, a solid part of the corrected vector is used as a valid part, while a dotted part is not used for the interpolation.

When the block direction of the selected vector is right and the horizontal component of the vector is negative, the left image is selected. When the block direction of the selected vector is left and the horizontal component of the vector is positive, the left image is selected. When the block direction of the selected vector is left and the horizontal component of the vector is negative, the right image is selected.

A weight coefficient "k" is used to control right and left multipliers 24 and 34. Considering the above-described correction and selection, the weight coefficient "k" is determined in the following manner. When the shift vector is not corrected, the weight coefficient k is set to 0.5 (i.e., k = 0.5). When the right image is selected as a result of the correction of the shift vector, the weight coefficient k is set to 1 (i.e., k = 1). When the left image is selected as a result of the correction of the shift vector, the weight coefficient k is set to 0 (i.e., k=0).

A relative position (e.g., a relative angle) between the actual image and the interpolated image is given from an input terminal 35 as viewpoint information. The shift amount calculator 30 calculates shift amounts of the right and left images based on the viewpoint information given from the input terminal 35 and the corrected shift vector information obtained from the vector corrector 29, respectively.

The shift vector information are constant irrespective of the viewpoint. Entered actual images have only one shift vector information. The shift amount is variable depending on the viewpoint. A shift position (x', y') of the right image is defined by the following equations.

$$x' = x \times a / (a + b)$$

$$y' = y \times a / (a + b)$$

where (x, y) represents the shift vector, "a" represents a viewpoint distance between the interpolated image and the right image, and "b" represents a viewpoint distance between the interpolated image and the left image.

A right image shifter 23 receives a block image from the right image memory 22, and shifts this block image by a shift amount given from the shift amount calculator 30. An output of the right image shifter 23 is sent to the right multiplier 24. The right multiplier 24 multiplies the weight coefficient "k" with the output of the right image shifter 23. The weight coefficient "k" is given from the vector corrector 29. A left image shifter 33 receives a block image from the left image memory 32, and shifts this block image by a shift amount given from the shift amount calculator 30. An output of the left image shifter 33 is sent to a left multiplier 34. The left multiplier 34 multiplies the weight coefficient "1- k" with the output of the left image shifter 33.

To produce an interpolated image, an adder 25 receives and adds the images which are weighted in the multipliers 24 and 34. The resultant interpolated image is generated from an output terminal 26.

The viewpoint information is successively changed. A plurality of interpolated images are obtained in accordance with given values of the viewpoint information.

For example, the right and left actual images are spaced 10 degrees in their viewpoints. By dividing 10 degrees by ten, a total of nine interpolated images are obtained for intermediate viewpoints positioned between two actual images.

## Fourth embodiment

The fourth embodiment relates to a method and an apparatus for processing the edge of the image.

In an interpolation of a stereoscopic image, there is a dislocation of patterns between the right actual image and the left actual image. Thus, there is a possibility that an edge of the image may be involved in only one of the right and left actual images. In such an edge region, the shift vector cannot be obtained accurately. Thus, the fourth embodiment corrects the shift vector of the edge region and realizes the interpolation based on the image using either of the right and left images.

The structural arrangement of the fourth embodiment is substantially the same as that of the third embodiment. However, the vector corrector 29 operates differently.

A valid block region comprises valid blocks having correct shift vectors. An invalid block region comprises invalid blocks having error shift vectors. The vector corrector 29 identifies the invalid block region which extends from the edge of the image. A boundary between the invalid block region and the valid block region is judged by the vector corrector 29. Then, the shift vectors in the invalid block region are replaced by a shift vector of a valid block closest to the invalid region.

Validity of each block is judged in the following manner.

If blocks are positioned far from the right or left edge the image, these blocks will not be influenced by the edge of the image. The region of such blocks is identified by a value of the shift vector.

More specifically, a vector search range is represented by the number of pixels corresponding to the horizontal maximum value of the shift vector. When a block is located far from the edge of the image by a distance equivalent to the vector search range, this block is not influenced by the edge of the image. The shift vector of this block is used as a reference vector.

The shift amount of the background image is roughly determined by the value of the reference vector. The region of the invalid blocks is determined by the number of pixels equivalent to a horizontal value of the reference vector.

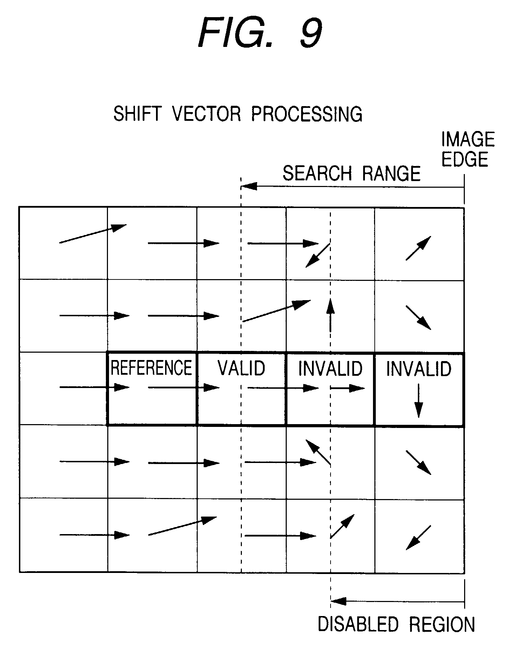

Fig. 9 shows a matrix of blocks each consisting of 4×4 pixels. A horizontal search range is ± 10 pixels. A fourth block from the right edge is a reference block which is not influenced by the edge of the image.

When the shift vector of the reference block has a horizontal absolute value of 6, a disabled or unfeasible region extends from the edge of the image with a width equivalent to 6 pixels. Two blocks from the right edge include the disabled or unfeasible region, and are therefore assigned to an invalid block, respectively.

The third block next to these invalid blocks is a valid block. The value of the shift vector of the invalid block is replaced by the value of the shift vector of the third block.

Next, another method for judging the invalidity of each block will be explained.

A difference between shift vectors of adjacent blocks is obtained successively from the reference block to the edge of the image. When the difference is equal to or smaller than one pixel, compared blocks are recognized as valid. When the difference becomes larger than one pixel, a compared block is recognized as invalid. Blocks located outside this invalid block are all invalid.

In a block having a corrected shift vector, the interpolation is performed based on either of the right image and the left image in the same manner as in the third embodiment.

The interpolation processing is performed independently in each block along a predetermined direction (usually a horizontal direction) along which the viewpoint shifts.

As this invention may be embodied in several forms without departing from the spirit of essential characteristics thereof, the present embodiments as described are therefore intended to be only illustrative and not restrictive, since the scope of the invention is defined by the appended claims rather than by the description preceding them, and all changes that fall within the metes and bounds of the claims, or equivalents of such metes and bounds, are therefore intended to be embraced by the claims.

## Claims

1. A stereoscopic image interpolating apparatus producing a stereoscopic image using a plurality of images, comprising:

   means (1,11; 21,31) for inputting right and left actual images photographed at different viewpoints for forming an interpolated image at a viewpoint positioned between the viewpoints of said right and left actual images;
   shift vector detecting means (8; 28) for obtaining a shift vector representing a dislocation of patterns between said right and left actual images within a search range (Figs. 5A-5C) being set based on a viewpoint distance between said right and left actual images;
   shift amount calculating means (9; 30) for calculating a shift amount required for an interpolation in each block of said right and left actual images based on viewpoint information and said shift vector obtained by said shift vector detecting means;
   image shift means (3,13; 23,33) for shifting each block image of said right and left actual images by the shift amount calculated in said shift amount calculating means (9; 30); and
   means (4, 5,14; 24, 25,34) for multiplying predetermined coefficients (k, 1-k) with the block images of said right and left actual images and adding said block images of said right and left actual images, thereby obtaining an interpolated image.

2. A stereoscopic image interpolating method for producing a stereoscopic image using a plurality of images at different viewpoints, comprising the steps of:

inputting right and left actual images photographed at different viewpoints for forming an interpolated image at a viewpoint positioned between the viewpoints of said right and left actual images;
obtaining a shift vector representing a dislocation of patterns between said right and left actual images within a search range being set based on a viewpoint distance between said right and left actual images;
calculating a shift amount required for an interpolation in each block of said right and left actual images based on viewpoint information and said shift vector;
shifting each block image of said right and left actual images by said shift amount;
multiplying predetermined coefficients with the block images of said right and left actual images; and
adding said block images of said right and left actual images, thereby obtaining an interpolated image.

3. The stereoscopic image interpolating apparatus in accordance with claim 1, wherein said viewpoints are positioned in a horizontal direction, and said search range has a horizontal size approximately equal to or larger than two times a vertical size thereof (Figs. 5A-5C).

4. The stereoscopic image interpolating apparatus in accordance with claim 1, wherein said search range is asymmetric in a horizontal direction (Figs. 5B and 5C).

5. A stereoscopic image interpolating apparatus producing a stereoscopic image using a plurality of images, comprising:

means (21, 31) for inputting right and left actual images photographed at different viewpoints for forming an interpolated image at a viewpoint positioned between the viewpoints of said right and left actual images;
shift vector detecting means (28) for dividing said right and left actual images into a plurality of blocks (Fig. 7). and obtaining a shift vector representing a dislocation of patterns between said right and left actual images in a concerned block, said shift vector being obtained based on information relating to a shift vector detection in an adjacent block as well as information of said concerned block;
vector correcting means (29) for checking whether a difference between said shift vector obtained by said shift vector detecting means and a shift vector of an adjacent block is larger than a predetermined degree, replacing said shift vector obtained by said shift vector detecting means with the shift vector of said adjacent block to produce a corrected shift vector when said difference is larger than said predetermined degree, and generating a vector value of said corrected shift vector together with image information used for an interpolation;
shift amount calculating means (30) for calculating a shift amount required for the interpolation in each block of said right and left actual images based on viewpoint information (35) and said corrected shift vector obtained by said vector correcting means (29);
image shift means (23, 33) for shifting each block image of said right and left actual images by the shift amount calculated in said shift amount calculating means (30); and
means (24, 25, 34) for producing the interpolated image by adding the block images of said right and left actual images produced from said image shift means (23, 33) when a difference between said shift vector of said concerned block and the shift vector of said adjacent block is smaller than a predetermined value, and producing the interpolated image by using either of said block images of said right and left actual images when the difference between said shift vector of said concerned block and the shift vector of said adjacent block is larger than the predetermined value.

6. A stereoscopic image interpolating method for producing a stereoscopic image using a plurality of images at different viewpoints, comprising the steps of:

inputting right and left actual images photographed at different viewpoints for forming an interpolated image at a viewpoint positioned between the viewpoints of said right and left actual images;
dividing said right and left actual images into a plurality of blocks;
obtaining a shift vector representing a dislocation of patterns between said right and left actual images in a concerned block, said shift vector being obtained based on information relating to a shift vector detection in an adjacent block as well as information of said concerned block;

checking whether a difference between said shift vector of the concerned block and a shift vector of an adjacent block is larger than a predetermined degree;

replacing said shift vector of the concerned block with the shift vector of said adjacent block to produce a corrected shift vector when said difference is larger than said predetermined degree, and generating a vector value of said corrected shift vector together with image information used for an interpolation;

calculating a shift amount required for the interpolation in each block of said right and left actual images based on viewpoint information and said corrected shift vector;

shifting each block image of said right and left actual images by the calculated shift amount; and

producing the interpolated image by adding the block images of said right and left actual images when a difference between said shift vector of said concerned block and the shift vector of said adjacent block is smaller than a predetermined value, and producing the interpolated image by using either of said block images of said right and left actual images when the difference between said shift vector of said concerned block and the shift vector of said adjacent block is larger than the predetermined value.

7. The stereoscopic image interpolating apparatus in accordance with claim 5, wherein said vector correcting means (29) selects either of right and left adjacent blocks when said difference is larger than the predetermined degree, and a shift vector of the selected adjacent block has a larger absolute value than the other (Fig. 7).

8. The stereoscopic image interpolating apparatus in accordance with claim 5, wherein said means (24, 25, 34) for producing the interpolated image compares a shift vector of a right adjacent block with a shift vector of a left adjacent block, and selects the shift vector having a larger absolute value for performing the interpolation (Fig. 8).

9. The stereoscopic image interpolating apparatus in accordance with claim 5, wherein said vector correcting means (29) designates an invalid region located at an edge of said right and left actual images with a width equivalent to a horizontal maximum value of a given search range, and replaces a shift vector of a block positioned in said invalid region with a shift vector of a closest block positioned in a valid region located inside said invalid region (Fig. 9).

FIG. 1

EP 0 896 301 A1

# FIG. 2

CREATION OF INTERPOLATED IMAGE

LEFT IMAGE          INTERPOLATED IMAGE          RIGHT IMAGE

EP 0 896 301 A1

# FIG. 3
# PRIOR ART

STEREOSCOPIC IMAGE PHOTOGRAPHING AND INTERPOLATION

BACKGROUND -------------------------------------

OBJECTIVE

VIEWPOINT

LEFT | INTERPO-LATION #1 | INTERPO-LATION #2 | INTERPO-LATION #3 | RIGHT

LEFT IMAGE

RIGHT IMAGE

ELECTRONIC
INTERPOLATING
PROCESSING

INTERPOLATED IMAGE

12

# FIG. 4

EP 0 896 301 A1

FIG. 5A

−15∼+15

±1

FIG. 5B

−5∼+15

±1

FIG. 5C

−5∼0

±1

EP 0 896 301 A1

# FIG. 6

RIGHT IMAGE 21 → RIGHT IMAGE MEMORY 22 → RIGHT IMAGE SHIFTER 23 → k 24 → ⊕ 25 → 26 INTERPOLATED IMAGE

VIEWPOINT INFORMATION (VIEWPOINT) (DISTANCE) 27 → SHIFT VECTOR DETECTOR 28 → VECTOR CORRECTOR 29 → SHIFT AMOUNT CALCULATOR 30

32 ERROR INFORMATION

LEFT IMAGE 31 → LEFT IMAGE MEMORY 32 → LEFT IMAGE SHIFTER 33 → 1−k 34

35 VIEWPOINT INFORMATION (RELATIVE) (ANGLE)

EP 0 896 301 A1

# FIG. 7

SHIFT VECTORS

# FIG. 8

SHIFT VECTOR CORRECTION

BEFORE CORRECTION

RIGHT IMAGE

INTERPOLATED IMAGE

LEFT IMAGE

AFTER CORRECTION

RIGHT IMAGE

INTERPOLATED IMAGE

LEFT IMAGE

# FIG. 9

SHIFT VECTOR PROCESSING

**European Patent Office**

## EUROPEAN SEARCH REPORT

**Application Number**

EP 97 30 5967

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP 0 637 815 A (CANON KK) 8 February 1995 <br> * page 8, line 40 - page 10, line 40; figures 1-19 * <br> --- | 1,2,5,6 | G06T15/10 <br> H04N7/46 |
| Y | US 5 613 048 A (CHEN SHENCHANG E ET AL) 18 March 1997 <br> * column 3, line 52 - column 10, line 21; figures 1-12 * <br> --- | 1,2,5,6 | |
| A | PATENT ABSTRACTS OF JAPAN <br> vol. 095, no. 010, 30 November 1995 <br> & JP 07 184210 A (MATSUSHITA ELECTRIC IND CO LTD), 21 July 1995, <br> * abstract * <br> & PATENT ABSTRACTS OF JAPAN <br> vol. 95, no. 10, 30 November 1995 <br> & JP 07 184211 A (MATSUSHITA ELECTRIC IND CO LTD), 21 July 1995, <br> Reason for citing : Family member illustrates another aspect of the invention. <br> * abstract * <br> & US 5 659 364 A (AOKI KATSUJI ET AL) 19 August 1997 <br> Reason for citing: Family member of the above patent applications, explains scope of invention. <br> * the whole document * <br> --- | 1-9 | |
| A,D | US 5 455 689 A (TAYLOR ROY Y ET AL) 3 October 1995 <br> * column 6, line 48 - column 7, line 64 * <br> * column 11, line 18 - column 12, line 59 * <br> * column 14, line 8 - line 18; figures 1,4,5 * <br> --- <br> -/-- | 1-9 | |

**TECHNICAL FIELDS SEARCHED (Int.Cl.6)**

G06T
H04N
G03B

The present search report has been drawn up for all claims

| Place of search | Date of completion of the search | Examiner |
|---|---|---|
| BERLIN | 26 January 1998 | Manntz, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 97 30 5967

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | PATENT ABSTRACTS OF JAPAN vol. 018, no. 455 (E-1595), 24 August 1994 & JP 06 141291 A (NIPPON HOSO KYOKAI), 20 May 1994, * abstract * | 1-9 | |

TECHNICAL FIELDS SEARCHED (Int.Cl.6)

The present search report has been drawn up for all claims

| Place of search | Date of completion of the search | Examiner |
|---|---|---|
| BERLIN | 26 January 1998 | Manntz, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)